(19) Europäisches Patentamt
European Patent Office
Office européen des brevets

(11) **EP 1 919 142 A2**

(12) **EUROPEAN PATENT APPLICATION**

(43) Date of publication:
**07.05.2008 Bulletin 2008/19**

(51) Int Cl.:
**H04L 12/56** (2006.01)  **H04Q 7/36** (2006.01)

(21) Application number: **07119935.0**

(22) Date of filing: **02.11.2007**

| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (71) Applicant: **Fujitsu Ltd.**<br>**Kawasaki-shi, Kanagawa 211-8588 (JP)** |
|---|---|
| (30) Priority: **03.11.2006 US 864180 P**<br>**31.10.2007 US 930360** | (72) Inventor: **Oleszczuk, Antoni**<br>**Kawasaki-shi, Kanagawa 211-8588 (JP)**<br><br>(74) Representative: **Wilding, Frances Ward**<br>**Haseltine Lake**<br>**Lincoln House**<br>**300 High Holborn**<br>**London WC1V 7JH (GB)** |

(54) **Bandwidth reuse in a multi-hop mobile relay system**

(57) A multi-hop mobile relay system including a base station, a first relay station, a second relay station, and a mobile station, in which a data flow is transmitted from the base station to the first relay station using a first bandwidth, the data flow is transmitted from the first relay station to the second relay station using a second bandwidth, the data flow is transmitted from the second relay station to a mobile station reusing the first bandwidth, providing the radio coverage area of the second relay station does not overlap with the radio coverage area of the base station. An algorithm of determining reused bandwidth allocations for each station in a system cell, composed of the base station and any number of the relay stations connected in any single or multi-hop arrangements, by finding all root branches, all data flows, assigning as many bandwidth allocations (in a general sense) as there are data flows going through the station, by first checking a possibility for a reuse of already existing allocations (by applying a correctness formula), or by creating new allocations; the correctness formula being that a reused bandwidth can only be allocated for two stations whose radio coverage areas don't overlap.

FIG. 1

**Description**

CROSS-REFERENCE TO RELATED APPLICATIONS

The present application claims priority to provisional application titled "Bandwidth Reuse in a Multi-Hop Mobile Relay Station", serial number 60/864, 180, filed November 3, 2006, inventor Antoni Oleszcsuk, attorney docket number 1974.1005P, and which is incorporated herein by reference.

BACKGROUND OF THE INVENTION

Wireless communication networks have become increasingly popular, and generally include a base station (BS) that provides service to a cell area located around the base station. Subscriber stations (SS), such as mobile stations (MS), cell phones, laptops, and the like, are able to communicate with the base station when they are within the service area of the base station. In certain types of wireless communication networks, such as, for example, those based on the Institute of Electrical and Electronics engineers (IEEE) 802.16e standard, one or more relay stations (RS) are installed to extend the service area of the base station.

In certain other types of wireless communication networks, such as, for example, those based on an extension to IEEE 802.16e standard, which may be known as IEEE 802.16j, multiple relay stations operating in a multi-hop mobile relay (MMR) environment may be used. This document uses terminology, including abbreviations, that is also used by the IEEE 802.16 2004 standard and its IEEE 802.16e 2005 extension for the sake of convenience, but is not meant to be limited thereby.

The terms "multi-hop mobile relay" and "relay station" may be used interchangeably, although in one sense a multi-hop mobile relay refers to the standard, while a relay station may be a station defined by the multi-hop mobile relay standard.

One purpose of a relay station may be to extend radio coverage of a base station. A relay station should be a low-cost alternative to a base station, because it may be used where the needed coverage extension may be of a relatively small size. Furthermore, if the cost of a relay station approaches that of a base station, then there may be less reason to forgo the extra functionality of a base station.

SUMMARY OF THE INVENTION

Various embodiments of the present invention provide a multi-hop mobile relay system that includes a plurality of stations in a multi-hop sequence, in which the stations in the multi-hop sequence reuse the same bandwidth, and the reusing stations are physically separate so that there may be no interference between them.

Various embodiments of the present invention provide a multi-hop mobile relay system that includes a first station, a second station, a third station, and a fourth station, in which a first bandwidth may be allocated to a data flow between the first station and the second station, a second bandwidth may be allocated to the data flow between the second station and the third station, and the first bandwidth may be reused by the data flow between the third station and the fourth station.

Various embodiments of the present invention provide a method of bandwidth reuse in a multi-hop mobile relay system that includes providing a plurality of stations in a multi-hop sequence, selecting two physically separate stations in the multi-hop sequence that do not interfere, and reusing the same bandwidth at the physically separate stations.

Various embodiments of the present invention provide a method of bandwidth reuse in a multi-hop mobile relay system that includes providing a first station, a second station, a third station, and a fourth station, allocating a first bandwidth to a data flow between the first station and the second station, allocating a second bandwidth to the data flow between the second station and the third station, and reusing the first bandwidth by the data flow between the third station and the fourth station.

Various embodiments of the present invention provide a system of bandwidth reuse in a multi-hop mobile relay system that includes means for providing a plurality of stations in a multi-hop sequence, means for selecting two physically separate stations in the multi-hop sequence that do not interfere, and means for reusing the same bandwidth at the physically separate stations.

Various embodiments of the present invention provide a system of bandwidth reuse in a multi-hop mobile relay system that includes means for providing a first station, a second station, a third station, and a fourth station, means for allocating a first bandwidth to a data flow between the first station and the second station, means for allocating a second bandwidth to the data flow between the second station and the third station, and means for reusing the first bandwidth by the data flow between the third station and the fourth station.

Various embodiments of the present invention provide a multi-hop mobile relay system that includes a base station, a first relay station, a second relay station, and a mobile station, in which a data flow may be transmitted from the base station to the first relay station using a first bandwidth, the data flow may be transmitted from the first relay station to the second relay station using a second bandwidth, the data flow may be transmitted from the second relay station to a mobile station reusing the first bandwidth, and the base station and the second relay station are physically separate so that there may be no interference between them.

The above-described embodiments of the present invention are intended as examples, and all embodiments of the present invention are not limited to including the features described above.

BRIEF DESCRIPTION OF THE DRAWINGS

Fig. 1 is an illustrative example of the radio coverage of a multi-hop mobile relay system, according to various embodiments of the present invention;

Fig. 2 is an illustrative example of an allocation of space within one Orthogonal Frequency Division Multiple Access (OFDMA) frame space used by a relay station for uplink and downlink communications, according to various embodiments of the present invention;

Figs. 3A-3D are aspects of an illustrative example of a multi-hop relay station system, according to various embodiments of the present invention;

Figs. 4A and 4B are aspects of another illustrative example of a multi-hop relay station system, according to various embodiments of the present invention;

Fig. 5 is a flowchart illustrating a general procedure of bandwidth reuse in a multi-hop mobile relay system, according to an embodiment of the present invention;

Fig. 6 is a flowchart illustrating an example procedure of bandwidth reuse in a multi-hop mobile relay system, according to an embodiment of the present invention; and

Fig. 7 is a flowchart illustrating a general algorithm of finding reused bandwidth for each station in a multi-hop mobile relay system, according to an embodiment of the present invention; and

Fig. 8 is an illustrative example of a multi-hop mobile relay system, for use with an embodiment of the present invention.

DESCRIPTION OF THE PREFERRED EMBODIMENTS

Reference may now be made in detail to embodiments of the present invention, examples of which are illustrated in the accompanying drawings, wherein like reference numerals refer to like elements throughout.

A relay station may be an intermediate station between a base station and mobile stations. A relay station transfers data between the base station and a mobile station. Data transfer may be needed when a mobile station cannot communicate with the base station directly.

One function of a relay station may be to transfer data in the form of active service flows between the base station and subscriber stations, such as mobile stations, cell phones, laptops, and the like. The active service flows travel in both directions between the base station and the mobile stations. Ideally, the transfer of service flows should be done in a manner that is transparent to the mobile stations. (A service flow is a term based on the IEEE 802.16 standard; it is a flow of data belonging to one particular application defined by the user.)

The mobile stations should not be made obsolete by a system that includes the multi-hop mobile relay option. This means that existing mobile stations should be compatible with the multi--hop mobile relay option. Thus, a relay station ought to work within the framework of the IEEE 802.16e standard.

More than one relay station can connect to a base station. There may be no formal limit on the number of relay stations that can be connected to a base station, except the limit imposed by the available bandwidth. Multiple relay stations can also be chained together, i.e. multi-hopped. Chaining may be defined as a relay station connecting to another relay station. A multi-hop relay station connection allows extending radio coverage in longer runs than that possible by using just one relay station.

Adding relay stations to the base station, however, reduces bandwidth efficiency. Additional relay stations reduce bandwidth efficiency because each additional relay station needs separate bandwidth allocations to deliver data to the relay station as well as to retransmit it. For example, separate bandwidth allocations are required to deliver data to a relay station connected to the base station as well as to retransmit it, because one allocation may be required for the base station-to-relay station link, and another allocation for the relay station-to-mobile station link. Thus, each additional relay station necessitates duplicating bandwidth allocations for the same data.

However, the two allocations mentioned above need not be of the same size within the OFDMA two-dimensional bandwidth space of time and frequency. That is because different transmission parameters may be used in the two links, such as modulation, forward error correction (FEC), and subcarrier permutations. Only the size of data, in terms of the number of bytes at the media access control (MAC) level, is required to be the same along one data flow.

Since each relay station added to a chain requires about doubling of the required bandwidth, as discussed above, multi-hopping would appear to reduce the available bandwidth in a geometric progression, with a ratio of two. A reduction of bandwidth due to multi-hopping in a geometric progression with a ratio of two, however, is not the case if bandwidth reuse is applied. In that case, the reduction in bandwidth used in a multi-hop relay system, rather, may be proportional to the number of relay stations (as shown later).

Various embodiments of the present invention provide a multi-hop mobile relay system in which bandwidth allocations by relay stations connected into multi-hop or single-hop links in the multi-hop mobile relay system are re-used.

Various embodiments of the present invention provide a criterion for bandwidth reuse correctness.

Various embodiments of the present invention provide an algorithm to achieve reused bandwidth allocations in a multi-hop mobile relay system.

For the algorithm mentioned above, the multi-hop mobile relay system need not be static but may change dynamically, meaning that the number of relay stations and their interconnections may change in time. The algorithm needs only to be reapplied after each such change.

The algorithm mentioned above may be used to determine reused bandwidth either in a whole cell, i.e. a subsystem involving a base station and its subordinate relay stations, or in a sub-cell formed by any particular relay station and its subordinate relay stations. This latter possibility may be used in multi-hop mobile relay systems in which bandwidth allocation decision making is distributed not only among the base stations but also among some or all relay stations.

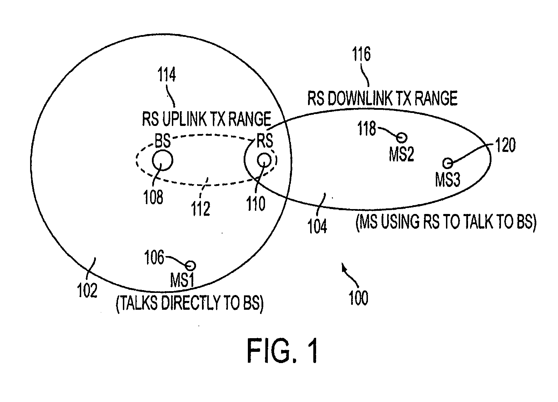

Fig. 1 is an illustration of an example of a one-hop relay station system 100. In the one-hop relay station system 100, the radio coverage of a base station 108 is augmented by a relay station 110, but the invention is not limited to a base station augmented by a relay station. The relay station 110 may share a radio channel with the base station 108, but the invention is not limited to a relay station that shares a radio channel with a base station. The base station 108 has a transmit coverage 102 with which it communicates with mobile stations and relay stations within range, such as mobile station 106 and relay station 110.

The uplink direction 114 of the relay station 110 may seem to be substantially coextensive with its uplink transmit coverage 112, but the invention is not limited to an uplink direction of a relay station that is substantially coextensive with its uplink transmit coverage.

The base station 108 may be seen to be within the uplink transmit coverage 112 of the relay station 110. Conversely, the downlink direction 116 of the relay station 110 may seem to be substantially coextensive with its downlink transmit coverage 104, but the invention is not limited to a downlink direction that is substantially coextensive with its downlink transmit coverage. The mobile stations 118 and 120 may be seen to be within the downlink transmit coverage 104 of the relay station 110.

The relay station 110 may have two communication sides, but the invention is not limited to a relay station having two communications sites. One of the communication sides may be dedicated to communication with a base station or a parent relay station (if the relay station is of a higher hop than one; not shown in this figure). Thus, one of the communication sides may be dedicated to the uplink direction 114. Conversely, the other communication side may be dedicated to communication with the mobile stations and subordinate relay stations (i.e. relay stations of a higher hop than one connected to the given relay station directly or through other relay stations; not shown in this figure). Thus, the other communication site may be dedicated to the downlink direction 116.

The relay station 110 may not be capable of transmitting and receiving signals at the same time, whether the transmission and reception occurs on both communication sides, or on only one communication side. Thus, only one radio frequency (RF) module may be necessary for the relay station 110, but the invention is not limited to a relay station with only one radio frequency module. In general, the transmit power of the two communication sides does not have to be the same.

Communication on one side of the relay station 110 may be more efficient than communication on the other side. In particular, communication on the side of the relay station 110 in communication with the base station 108 may usually be more efficient than communication with a mobile station, or another relay station. The possibility of having more efficient communication on one side of a relay station allows some savings of the amount of bandwidth that must be used. The required bandwidth, however, may still be approximately twice as large as the bandwidth required for direct communication between the base station and the mobile station. This duplication of bandwidth may be needed in both uplink direction 112 the downlink direction 116.

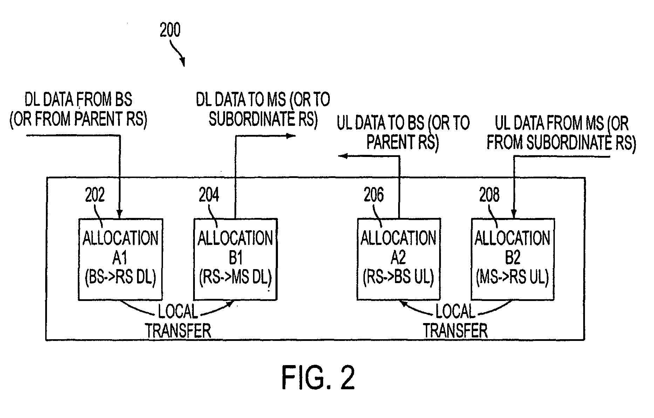

Fig. 2 is an illustration of an example of an allocation of space within one OFDMA frame space 200 used by a relay station for uplink and downlink communications. In Fig. 2, downlink allocation 202 may be accompanied by downlink allocation 204, and uplink allocation 206 may be accompanied by uplink allocation 208. The bandwidth allocations may be located anywhere within the bandwidth space of the frame 200. The downlink allocation 202, furthermore, may be seen to be dedicated to the downlink direction from a base station or a parent relay station to the relay station. The allocation 204, similarly, is dedicated to the downlink direction from the relay station to mobile stations or to subordinate relay stations. The allocation 208, on the other hand, is dedicated to the uplink direction between mobile stations and subordinate relay stations and the relay station. Allocation 206, similarly, is dedicated to the uplink direction between the relay station and a base station or a parent relay station.

The allocations described here apply substantially equally to the downlink and the uplink allocations, since the ideas presented here are equally applicable to both downlink and uplink allocations. Furthermore, the term "allocation" may be used in a more general sense than just one region or area of the frame bandwidth space. An allocation may be deemed to include several such regions, of both downlink and uplink uses.

In Fig. 2, for example, the allocation between the relay station and the base station may be seen to be composed of downlink region 202 and uplink region 206, named also as allocations A1 and A2. The purpose of the allocation may be to exchange data by the base station with the relay station. Thus, the allocation may be used by the base station to service the area covered by the relay station.

Similarly, the purpose of the allocation between the relay station and mobile stations and subordinate relay stations, which may be seen to be composed of downlink region 204 and uplink region 208, named also as B1 and B2, may be to service the area covered by the relay station from the perspective of the relay station. In particular, the allocation around the relay station may be used to communicate with mobile stations and other relay stations within range. Each of these two kinds of allocations may be necessary when a relay station is used.

The distinction between downlink and uplink allocations may be omitted. So in the above example, instead of talking about two allocations A1 and A2, we may represent them together as one allocation "A". Similarly, with allocations B1 and B2, they may be treated as just one allocation "B". Combining the uplink and downlink allocations used by one relay station is not necessary; it is done only to simplify the presentation of bandwidth reuse procedures below.

The two allocations A and B introduced in the example above are an illustration of the requirement mentioned earlier that using a relay station requires two allocations in general, such as the A and B. Allocation A is required to deliver (and/or take) data by the parent station, and allocation B is required by the relay station to transfer the same data by the relay station to (and/or from) the mobile stations or to the subordinate relay stations.

Another simplifying convention may be used here by which allocation A defined above is deemed to belong to (or is used by) the parent station, and the allocation B defined above is used by the given relay station. This convention also applies to the base station (being the "given" station), in which case there is no allocation "A", but only "B". That is because the base station has no parent station (at least not in the sense used here). This convention is adopted to simplify the presentation of bandwidth reuse procedures below.

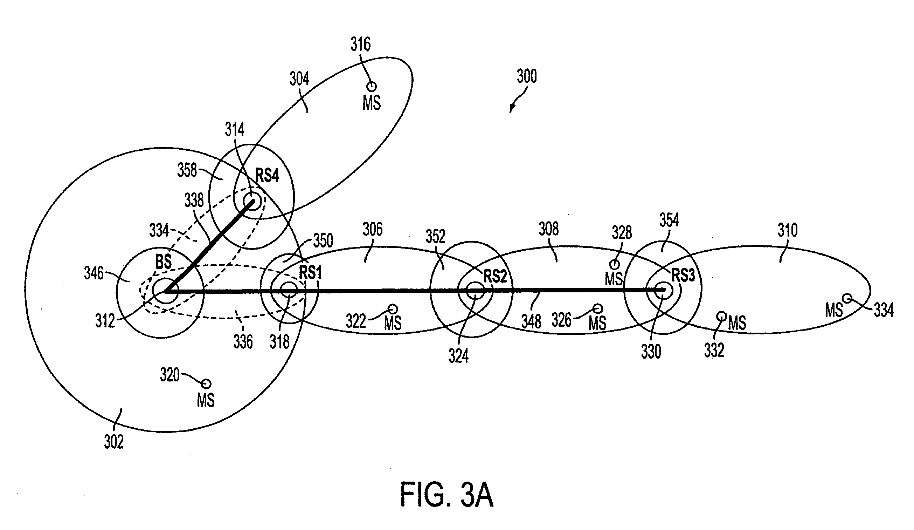

In Figs. 3A-3D is shown an illustration of an example of the radio coverage of a multi-hop relay station system. In Figs. 3A-3D, uplink transmit coverages 334 and 336 are shown only for relay station 314 and relay station 318, respectively, in order not to obscure the drawing. For the other relay stations, the uplink coverage may be assumed to coincide substantially with the downlink transmit coverage of a preceding relay station in the multi-hop link.

Similarly, the uplink transmit coverage of the mobile stations is not shown, but it may be assumed that the uplink transmit coverage of each of the mobile stations may be just large enough to cover the station, relay station or base station to which the mobile station is currently connected. Thus, if all of the mobile stations connected to a relay station or base station are considered, the aggregate (uplink) transmit coverage of all of the mobile stations and of the uplink transmit coverage of the subordinate relay stations may be about the same as the downlink transmit coverage of the controlling relay station or base station.

The uplink transmit coverage of the relay stations (and of the mobile stations) may be omitted in subsequent drawings in order not to obscure them, since their purpose and importance may be covered by just considering the downlink transmit coverage of the stations (similarly to removing the distinction between the downlink and uplink allocations as explained in the previous paragraphs).

In the multi-hop relay station system 300, the radio coverage of a base station 312 is augmented by relay stations 314 and 318, but the invention is not limited to a base station augmented by a relay station. The relay stations 314 and 318 may share radio channels with the base station 312, but the invention is not limited to a relay station that shares a radio channel with a base station. The base station 312 has a (downlink) transmit coverage 302 with which it communicates with mobile stations and relay stations within range, such as mobile station 320 and relay stations 314 and 318.

The relay station 314 has an uplink transmit coverage 334 for communicating with base station 312. The base station 312 may be seen to be within the uplink transmit coverage 334 of relay station 314. The relay station 314 also has a downlink transmit coverage 304 for communicating with, for example, mobile station 316, but the invention is not limited to a relay station communicating with a mobile station. The mobile station 316 may be seen to be within the downlink transmit coverage 304. Thus, mobile station 316 can communicate with base station 312 via relay station 314, but the invention is not limited to a mobile station communicating with a base station via a relay station.

The relay station 318, similarly, has an uplink transmit coverage 336 for communicating with base station 312. The base station 312 may be seen to be within the uplink transmit coverage 336 of relay station 318. The relay station 318 also has a downlink transmit coverage 306 for communicating with, for example, relay station 324 and mobile station 322. Both of relay station 324 and mobile station 322 may be seen to be within the downlink transmit coverage 306 of relay station 318. Thus, mobile station 322 and relay station 324 can communicate with base station 312 via relay station 318, but the invention is not limited to a relay station or a mobile station communicating with a base station via another relay station.

Relay station 324, in turn, may be seen to have an uplink transmit coverage substantially coextensive with downlink transmit coverage 306 of relay station 318. Thus, relay station 324 can communicate with relay station 318. Relay station 324 also has a downlink transmit coverage 308 for communicating with, for example, relay station 330, and mobile stations 326 and 328. Relay station 330, and mobile stations 326 and 328, may be seen to be within the downlink transmit coverage 308 of relay station 324. Thus, relay station 330, as well as mobile stations 326 and 328, can communicate with base station 312 via relay stations 318 and 324.

Relay station 330, finally, may be seen to have an uplink transmit coverage substantially coextensive with downlink transmit coverage 308 of relay station 324. Thus relay station 330 can communicate with relay station 324. Relay station 330 also has a downlink transmit coverage 310 for communicating with, for example, mobile stations 332 and 334. Mobile stations 332 and 334 may be seen to be within the downlink transmit coverage 310 of relay station 330. Thus, mobile stations 332 and 334 can communicate with base station 312 via relay stations 318, 324, and 330.

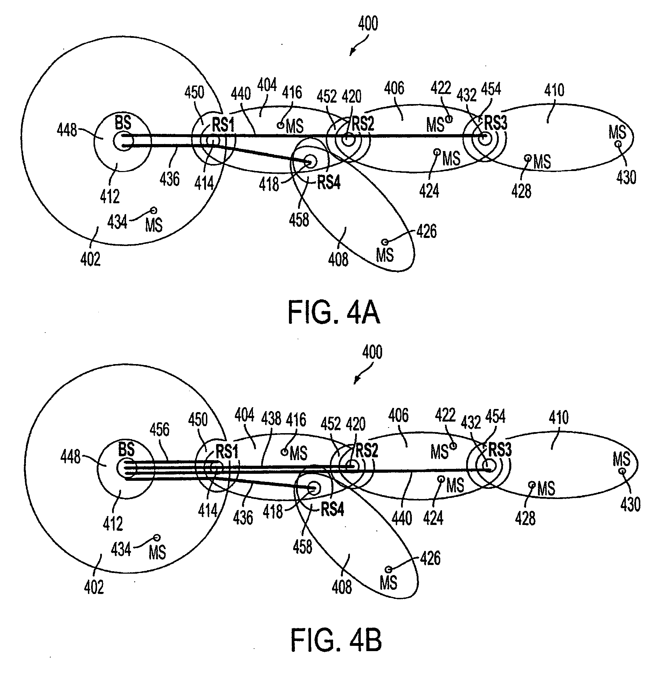

Of course, a system may have several one-hop relay stations and several multi-hop relay station chains. In Figs. 4A and 4B are shown illustrations of an example of a multi-hop relay station system 400. A multi-hop relay station chain may also have branches. Figs. 4A and 4B are illustrations of an example of relay station chain branching in a relay station coverage area.

In the multi-hop relay station system 400, the radio coverage of a base station 412 is augmented by a relay station 414, but the invention is not limited to a base station augmented by a relay station. The relay station 414 may share a radio channel with the base station 412, but the invention is not limited to a relay station that shares a radio channel with a base station. The base station 412 has a (downlink) transmit coverage 402 with which it communicates with mobile stations and relay stations within range, such as mobile station 434 and relay station 414.

The relay station 414 may have an uplink transmit coverage (not shown) just to cover the base station 412. The relay station 414 also a downlink transmit coverage 404 for communicating with, for example, mobile station 416 and relay stations 418 and 420, but the invention is not limited to a relay station communicating with a mobile station or another relay station. The mobile station 416 and the relay stations 418 and 420 may be seen to be within the downlink transmit coverage 404. Thus, mobile station 416 and the relay stations 418 and 420 can communicate with base station 412 via relay station 414, but the invention is not limited to a mobile station or a relay station communicating with a base station via another relay station.

The relay station 418 may have an uplink transmit coverage (not shown) just to cover the relay station 414. The relay station 418, similarly, has a downlink transmit coverage 408 for communicating with, for example, mobile station 426. Mobile station 426 may be seen to be within the downlink transmit coverage 408 of relay station 418. Thus, mobile station 426 can communicate with base station 412 via relay station 418, but the invention is not limited to a mobile station communicating with a base station via a relay station.

The relay station 420, similarly, has an uplink transmit coverage substantially coextensive with the downlink transmit coverage 404 of relay station 414 for communicating with relay station 414. The relay station 414 may be seen to be within the uplink transmit coverage of relay station 420. The relay station 420 also has a downlink transmit coverage 406 in for communicating with, for example, relay station 432 and mobile stations 422 and 424. All of relay station 432 and mobile stations 422 and 424 may be seen to be within the downlink transmit coverage 406 of relay station 420. Thus, mobile stations 422 and 424 and relay station 432 can communicate with base station 412 via relay stations 418 and 420, but the invention is not limited to a relay station or a mobile station communicating with a base station via another relay station.

Relay station 432, finally, may be seen to have an uplink transmit coverage substantially coextensive with the downlink transmit coverage 406 of relay station 420. Thus relay station 432 can communicate with relay station 420. Relay station 432 also has a transmit coverage 410 on the downlink for communicating with, for example, mobile stations 428 and 430. Mobile stations 428 and 430 may be seen to be within a transmit coverage 410 of relay station 432. Thus, mobile stations 428 and 430 can communicate with base station 412 via relay stations 414, 420, and 432.

As shown in Figs. 4A and 4B, there may be stations involved in a multi-hop relay station system whose radio coverage areas do not overlap. These radio coverage areas may be mutually separated in space. For example, relay station 414 and relay station 432 may be seen to have separate coverage areas that do not overlap, i.e. neither the downlink nor the uplink coverage areas overlap for the relay station 414 and relay station 432. Similarly, and referring now to Fig. 3A, relay stations 318 and relay station 330 may be seen to have separate coverage areas that do not overlap.

Non-overlapping areas of radio coverage have a potential for bandwidth reuse. That is, bandwidth devoted to radio coverage area 306, which may be used to carry service flows between relay station 318 and relay station 324 in Figs. 3A-3D, might also be used in radio coverage area 310, which may be used to carry service flows between relay station 330 and mobile stations 332 and 334.

Similarly, and referring again to Figs. 4A and 4B, bandwidth devoted to radio coverage area 404, which may be used to carry service flows between relay station 414, relay station 420, and relay station 418, as well as mobile station 416, might also be used for radio coverage area 410, which may be used to carry service flows between relay station 432 and mobile stations 428 and 430.

Frame bandwidth in a multi-hop relay station system cannot be reused completely freely however; rather, there are certain constraints. Referring again to Figs. 3A-3D, it may be seen that the multi-hop relay station system 300 forms a tree-like structure. The tree may be composed of a base station 312, its associated relay station 314, and the chain formed by relay station 318, relay station 324, and relay station 330. Thus, the root of the tree may be the base station, and braches are formed by relay stations.

Similarly, in Figs. 4A and 4B, base station 412 forms the root of a tree having a chain of relay stations composed of relay station 414, relay station 420, and relay station 432, with a branch from relay station 414 formed by relay station 418.

In various embodiments, a **root branch** may be defined as a sequence of stations, but the invention is not limited to a root branch defined as a sequence of stations. The stations, which may be relay stations, maybe connected to each other in a sequence starting with the base station and ending in a "leaf' station. A root branch may be symbolically denoted as follows:

$$V_0 = \text{base station}, V_1 = \text{relay station 1}, V_2 = \text{relay station 2}, ..., V_N = \text{relay station N,}$$

Or as follows:

Branch V: base station, relay station 1, relay station 2, ..., relay station N, Where N is the number of relay stations present in the branch, and relay station N is the last relay in the branch, i.e. it does not have any further relay station connected to it.

A root branch may be denoted by an upper-case letter from the end of the alphabet, e.g. V, as described above. A root branch composed of relay stations may be also called a chain of relay stations. A system (composed of a base station and its associated relay stations) generally may have many root branches.

Referring now to Fig. 3A, multi-hop relay system 300 may be seen to have two root branches. Root branch 338 may be composed of base station 312 and relay station 314, while root branch 348 may be composed of base station 312, relay station 318, relay station 324, and relay station 330.

Referring now to Fig. 4A, multi-hop relay system 400 may be seen to have two root branches: root branch 440 may be composed of base station 412, relay station 414, relay station 420, and relay station 432, while root branch 436 may be composed of base station 412, relay station 414, and relay station 418.

**Branch neighbor stations** may be defined as any two stations that occur next to each other on a root branch. For example, base station 412 and relay station 414 are branch neighbor stations in Fig. 4A. Similarly, relay station 414 and relay station 420 are branch neighbor stations, as well as relay station 414 and relay station 418. Being a branch neighbor may not be a transitive relationship, however. Thus, relay station 420 and relay station 418 are not branch neighbors, even though relay station 420 and relay station 418 are each a branch neighbor of relay station 414.

Every station in a system (i.e. a relay station or the base station) may use a set of bandwidth allocations. A **bandwidth allocation set** may be denoted as follows:

$$T(\text{base station}) = \{A, B, C, ... \},$$

$$T(\text{relay station}) = \{G, H, I, ...\},$$

and so on, where the upper case letters are the particular allocations. Allocations are applicable substantially equally to the uplink and downlink. One allocation may be deemed as comprising both uplink and downlink allocations used for particular communications between stations, or it may be of just one particular type (as explained in the previous paragraphs). Note that T is a function assigning an allocation set to every station.

A criterion for the correctness of bandwidth reuse may be a test if stations whose coverage areas overlap (which may be called **overlapping stations**) are allocated different bandwidths. Generally, it may be noticed that for the bandwidth allocations for different stations to be correct, it may be necessary and sufficient that any two stations whose coverage areas overlap use different bandwidth allocations. More precisely, bandwidth allocations sets are disjoint for any two overlapping stations. Formally,

$$T(Si) \cap T(Sj) = \emptyset \text{ for any two different stations Si an Sj} \qquad (1)$$

whose coverage areas overlap.

If the coverage areas may overlap only for the branch neighbor stations, the correctness criterion (1) needs to be checked only for neighboring stations along any possible root branch. Criterion (1) thus simplifies to the following:

$$T(V_i) \cap T(V_{i+1}) = \emptyset \text{ for any root branch V and } 0 \leq i < N, \qquad (2)$$

Where N is the number of relay stations present in branch V.

In the examples below, it may be assumed (unless stated otherwise) that coverage areas overlap only for the branch neighbor stations.

Data in a WIMAX system may be associated with service flows (explained in a previous paragraph). User data passes in service flows between the base station and mobile stations (or any kind of subscriber stations). Since a multi-hop mobile relay system uses relay stations to re-transmit service flows, data must pass through the relay stations on the way to its destination. Thus, the path of a service flow starts or ends in a mobile station, while the base station may be at the other end of the service flow.

Mobile stations, furthermore, may be grouped by the stations serving them. The stations serving a mobile station may be the relay stations or the base station. Therefore, the data associated with service flows may be represented by the serving stations. For simplicity all service flows (in the IEEE 802.16 sense) coming to or from the same serving station may be grouped together into **data flows.** To fully describe a data flow in a multi-hop mobile relay system, it is not sufficient to just state the serving station but also all the intermediate relay stations used to transfer the particular user data. Therefore, a data flow may be described by specifying all the stations through which the data flow must pass. Formally, a data flow may be defined as a part of a root branch of stations, beginning at the base station, and ending not necessarily in the leaf station of the root branch:

$$\text{Data flow F: } V_0, V_1, \ldots, V_M,$$

Where V is a root branch of stations, $0 \leq M \leq N$, and N is the number of relay stations present in the root branch V. It should be noted that there is always one data flow that is composed of just the base station (more generally, the root station, as explained below), $V_0$, which indicates the local data traffic of the base station (or the root station):

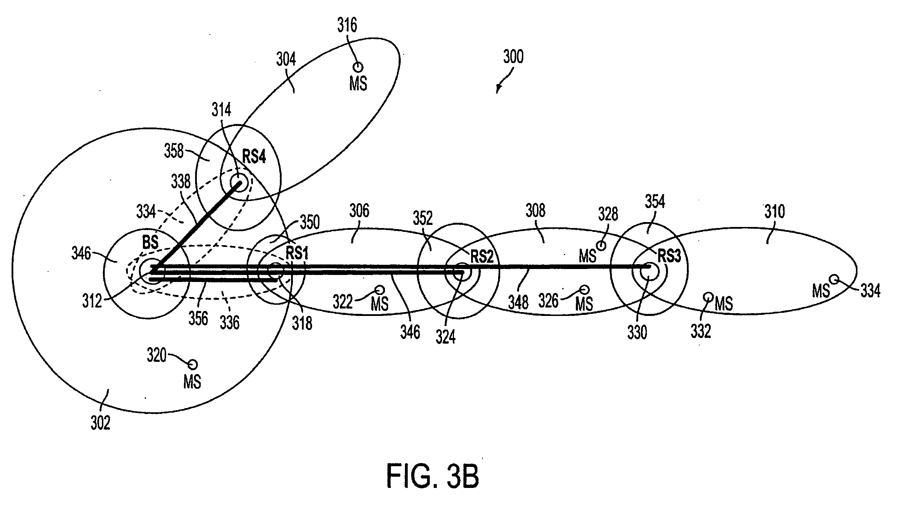

Referring now to Fig. 3B, the multi-hop mobile relay system 300 has five data flows. Data flow 346 is for local traffic of the base station, i.e. it includes the service flows to or from the area 302 served by the base station 312. Similarly, data flow 338 may include base station 312 and relay station 314. Data flow 356 may include base station 312 and relay station 318. Data flow 346 may include base station 312, relay station 318, and relay station 324. Finally, a data flow 348 may include base station 312, relay station 318, relay station 324, and relay station 330.

Similarly in the example of Fig. 4B, there are five data flows. Data flow 448 includes just the base station 412, i.e. it is for the local traffic of the base station. Data flow 456 includes the base station 412 and the relay station 414. Data flow 438 includes base station 412, relay station 414, and relay station 420. Data flow 440 includes base station 412, relay station 414, relay station 420, and relay station 432. Finally, data flow 436 includes base station 412, relay station 414, and relay station 418.

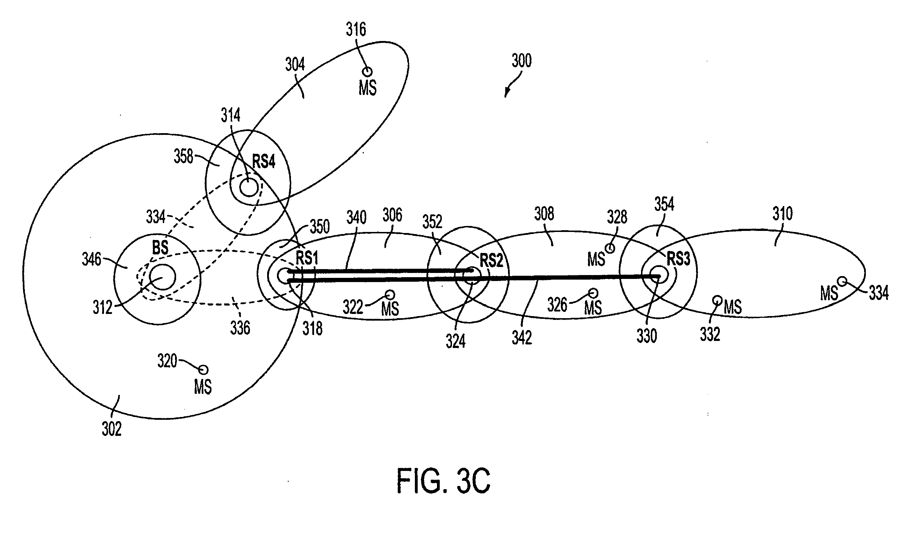

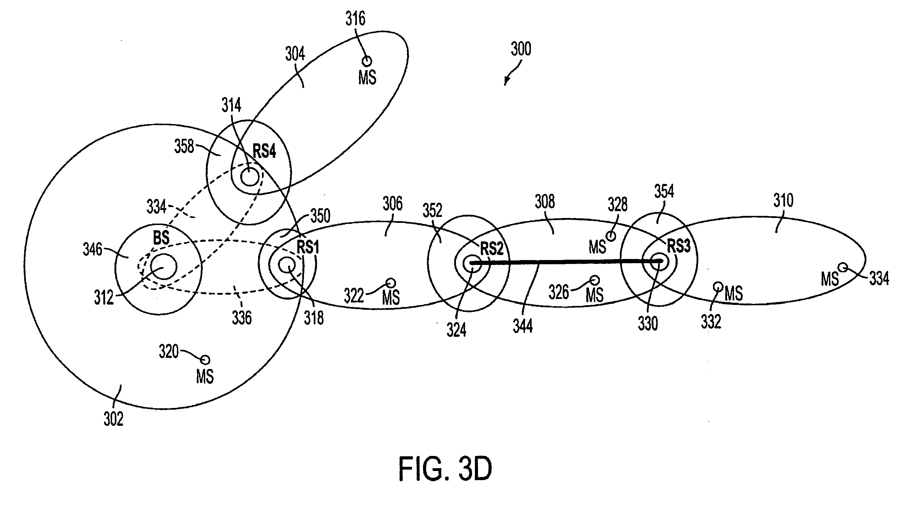

In a more general approach, any station, the base station or a relay station, can be taken as the root station. In that case, only the root station and all its subordinate relay stations are considered as a "system", which is really only a sub-cell. The above terms of root braches and data flows are then easily portable to this case. Instead of the base station, there will be the selected relay station at the root positions. For example, Fig. 3C shows data flows relative to the relay station 318 treated as the root station. In this case, there are three data flows 350, 340, and 342. All these data flows start at the root relay station 318. Data flow 350 is for the local coverage area of the root station 318. Similarly, in Fig 3D, the relay station 324 is taken as the root station. In this case there two data flows: the data flow 352, which is for the local traffic of the root station, and data flow 344, which is from the root to the leaf relay station 330.

A **bandwidth allocation function** associated with each data flow makes moving the data of the data flow possible. The bandwidth allocation function assigns a bandwidth to each node (i.e. station) of the data flow to be used when transferring the flow's data. The bandwidth used by a node must of course belong to the bandwidth allocation set assigned to the node. Formally, this may be written as follows:

$$f(F_i) \in T(F_i) \text{ for all } 0 \leq i \leq M \qquad (3)$$

Where f is the bandwidth allocation function, F is the data flow, and $T(F_i)$ is the bandwidth allocation set assigned for station $F_i$.

Each of the bandwidth allocation functions ought to be unique at every node. Formally this may be written as:

$$f(R) \neq g(R) \text{ for all } f \text{ and } g, \qquad (4)$$

Where f and g are bandwidth allocation functions, and R is a station through which both the data flows pass (the two data flows on which the two bandwidth allocation functions f and g have been defined). Property (4) means that separate data flows use separate bandwidths at every node.

Property (4) may be used to calculate the number of bandwidth allocations that are needed at a node; it is simply the same as the number of data flows passing through the node. As shown in Fig. 3B, the system 300 has five data flows, as described above. Thus, five bandwidth allocations are required at the first node, i.e. the base station 312 (since all the data flows begin at the base station). Base station 312 may be assigned five bandwidth allocations, one for each of the above mentioned five data flows.

The five allocations at base station 312 may be the following:

$$T(\text{base station } 312) = \{A, B, C, D, E\}$$

Relay station 314 needs only be assigned one bandwidth allocation, for the one data flow coming to it, 338:

$$T(\text{relay station } 314) = \{ F \}$$

A new allocation, F, is required here because T(relay station 314) and T(base station 312) must be disjoint according to requirement (2).

Relay station 318 is assigned three bandwidth allocations, one for each of three data flows going through it, as shown in Fig. 3B.

$$T(\text{relay station } 318) = \{F, G, H\}$$

Two new allocations are required here, G and H, because T(relay station 318) and T(base station 312) must be disjoint according to requirement (2). Allocation F, however, may be reused because the coverage area of relay station 314 and relay station 318 are not overlapping.

Relay station 324 is assigned two bandwidth allocations, one for each of the two data flows going through it, as shown in Fig. 3B.

$$T(\text{relay station } 324) = \{A, B\}$$

However, allocations here may be reused from T(base station 312) because coverage areas of relay station 324 and base station 312 are not overlapping.

Relay station 330 is assigned one bandwidth allocation, for the one data flow coming to it. This bandwidth allocation is reused as well.

$$T(\text{relay station } 330) = \{ C \}$$

From the above example, it may be seen that even though the system 300 has five stations, the number of required allocations to service all their coverage areas may be only eight, i.e. not even twice as much, and that geometric growth of bandwidth requirements due to multi-hopping does not occur.

It may be proved that the number of bandwidth allocations (in the general sense considered here), N, required by a cell that uses n relay stations (not counting the base station, or the root station if a sub-cell is considered) satisfies the following inequalities:

$$n + 2 \leq N \leq 2n + 1 \tag{5}$$

(In the above, it must be assumed that $n \neq 0$; for $n = 0$, $N = 1$ obviously.)

Furthermore, it may be noticed that the left boundary, i.e. $N = n + 2$ is reached by a cell in which all the relay stations are one hop. Similarly the right boundary, i.e. $N = 2n + 1$, is reached in a cell in which all the relay stations form one multi-hop branch (not necessarily one single chain but any tree in fact).

Accordingly, the use of multi-hop relay stations does not make a non-proportional bandwidth growth. Only the proportionality factor will increase from close to one to become close to two. (The biggest proportionality factor is 3 for $n = 1$, but it decreases quickly if n grows.)

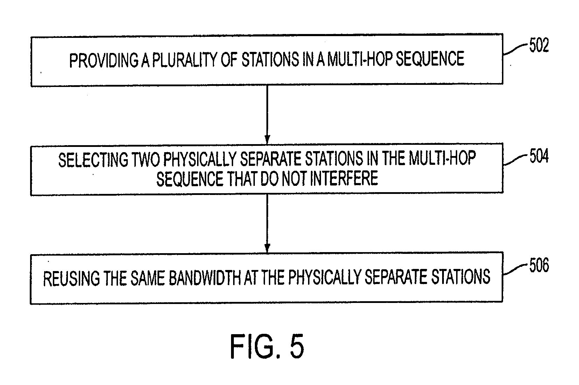

Various embodiments of the present invention provide a method of bandwidth reuse in a multi-hop mobile relay system. Fig. 5 is a flowchart illustrating a general procedure of bandwidth reuse in a multi-hop mobile relay system, according to an embodiment of the present invention. Referring now to Fig. 5, in operation 502, a plurality of stations is provided in a multi-hop sequence. From operation 502, the operation moves to operation 504 where two physically separate stations in the multi-hop sequence that do not interfere are selected. From operation 504, the operation moves to operation 506 where the same bandwidth is re-used at the physically separate stations.

Fig. 5 represents only an exemplary process, and embodiments of the present invention are not limited to a process including all of the operations shown in Fig. 5. Instead, some of the operations may be eliminated or rearranged without departing from the spirit of the present invention.

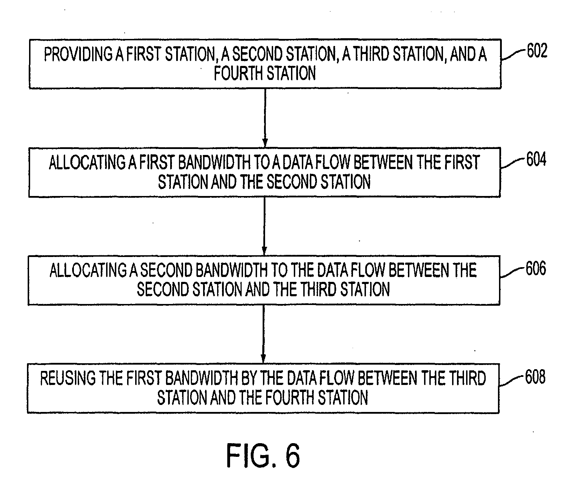

Various embodiments of the present invention provide a method of bandwidth reuse in a multi-hop mobile relay system. Fig. 6 is a flowchart illustrating a procedure of bandwidth reuse in a multi-hop mobile relay system, according to an embodiment of the present invention. Referring now to Fig. 6, in operation 602, a first station, a second station, a third station, and a fourth station are provided.

From operation 602, the operation moves to operation 604 where a first bandwidth may be allocated to a data flow between the first station and the second station.

From operation 604, the operation moves to operation 606 where a second bandwidth may be allocated to the data flow between the second station and the third station.

From operation 606, the operation moves to operation 608 where the first bandwidth may be re-used by the data flow between the third station and the fourth station.

Fig. 6 represents only an exemplary process, and embodiments of the present invention are not limited to a process including all of the operations shown in Fig. 6. Instead, some of the operations may be eliminated or rearranged without departing from the spirit of the present invention.

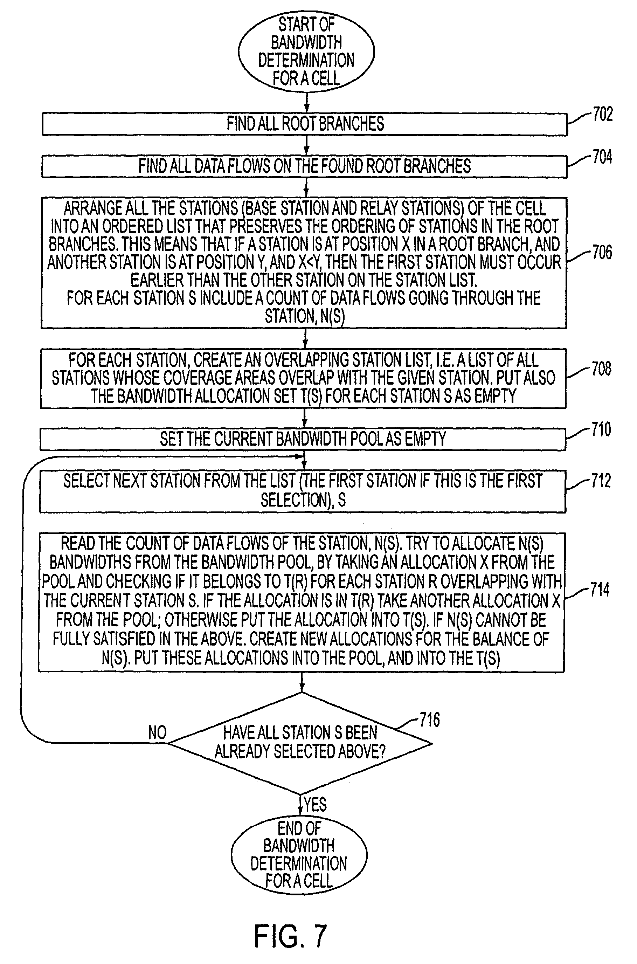

Various embodiments of the present invention provide a method of bandwidth reuse in a multi-hop mobile relay system. Fig. 7 is a flowchart illustrating a procedure of bandwidth reuse in a multi-hop mobile relay system, according to an embodiment of the present invention. Referring now to Fig. 7, in operation 702, all root branches are found for the cell.

From operation 702, the operation moves to operation 704 where all data flows occurring on the root branches are found.

From operation 704, the operation moves to operation 706 where all the stations of the given cell (the base station and the relay stations) are put into a list. The list is ordered so it preserves the ordering of stations in the root branches. This means that if a station is at a position X in a root branch, and another station is at position Y in the same or another root branch, and if $X < Y$, then the first station must occur earlier than the other station on the station list. There is also a count of data flows going through each station created, N(S).

From operation 706, the operation moves to operation 708 where an overlapping station list is created for each station. This makes the algorithm most general, i.e. good for any coverage overlap possibilities, not just for the simplified case where the coverage areas may overlap only for the branch neighbor stations. (Of course it is much easier to find the overlapping lists in the latter case.) The bandwidth allocations sets for each station, T(S) are also initialized here as empty sets.

From operation 708, the operation moves to operation 710 where the bandwidth pool is initialized to the empty set. The bandwidth pool will eventually contain all the allocations used by the cell.

From operation 710, the operation moves to operation 712, which is a loop entry for checking each station for the station list. The next station is selected for the operations below.

In operation 714, the actual bandwidth allocations for the selected station are determined. The required number of allocations is equal to the number of data flows going through the station (or ending on the station), N(s). First are checked the existing allocations in the bandwidth pool (which may have been created earlier by the algorithm). The existing allocations are checked if they satisfy the correctness criterion for a reuse, given in (1). If no further existing allocation can satisfy the correctness criterion, new allocations are created, so the station gets all required N(S) allocations. Any new bandwidth allocations are also put into the bandwidth pool (to be potentially reused by subsequent stations).

The algorithm then checks if all the stations have been already selected for the above operations. If not all, the algorithm will proceed to the next station, and operations 712 and 714 will be repeated for the new station. Otherwise the algorithm will end. The result will be the determined allocation set, T(S), for each station S in the system cell.

Fig. 7 represents only an exemplary process, and embodiments of the present invention are not limited to a process including all of the operations shown in Fig. 7. Instead, some of the operations may be eliminated or rearranged without departing from the spirit of the present invention.

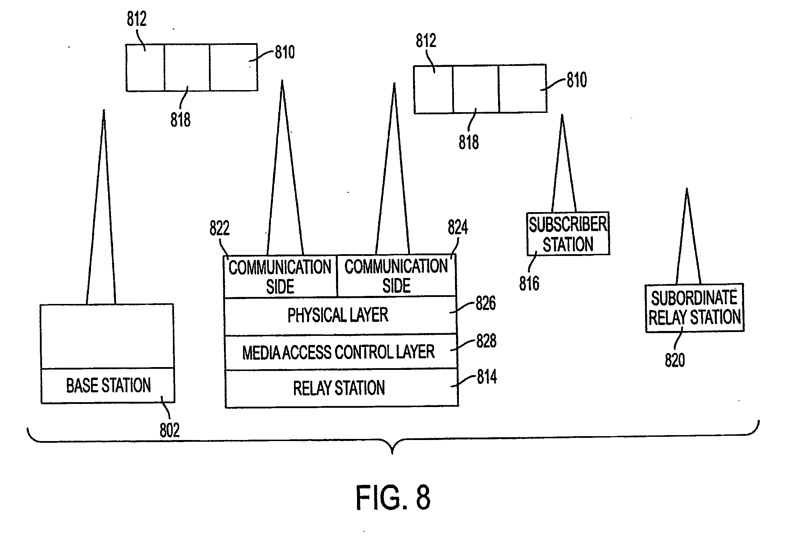

In Fig. 8 is shown an illustrative example of a multi-hop mobile relay system 800. Service flows 818 may occur between a base station 802 and a plurality of mobile stations or other subscriber stations, or going through relay stations, such relay station 814, in the multi-hop mobile relay system 800, although the invention is not limited to service flows between a base station, mobile stations, and relay stations.

The service flows 818 may be in the form of bursts of data packets. The data packets may be assigned to a frequency 810 and a timeslot 812. A relay station 814 may re-transmit the service flows 818, although the invention is not limited to data packets assigned to a frequency and a timeslot in which a relay station retransmits service flows.

The base station 802 may send the service flows 818 to the relay station 814 to be retransmitted to a mobile station 816 or to a subordinate relay station 820 (which in turn may retransmit the data to another mobile station). The relay station 814, furthermore, may have separate communication facilities 822 and 824 (which may be more than two) for transmitting and receiving communications at different times, although the invention is not limited to a relay station having separate communication facilities for transmitting and receiving communications at different times.

The base station 802 may also include control messages together with data of the service flows 818 to be transmitted to the relay station 814. The control messages may include the frequency 810 and the timeslot 812 in which the relay station 814 re-transmits the service flows 818 to the mobile station 816 or to the subordinate relay station 820, as well as retransmit the service flows 818 that are received from the mobile station 816, or from the subordinate relay station 820, to the base station 802, although the invention is not limited to control messages including the frequency and the timeslot in which a relay station may retransmit service flows.

The relay station 814 receives the service flows and control messages 818, which may be in the form of bursts of data packets, from the base station 802 at the communication side 822. The relay station 814 may have a physical layer 826 that encodes and decodes the data packets up to a media access control level 828, although the invention is not limited to a relay station having a physical layer that encodes and decodes data packets up to a media access control level.

The relay station 814 may re-transmit the data packets to the mobile station 816, or to the subordinate relay station 820, at the frequency 810 and in the timeslot 812 determined by the base station 802 and included in the control messages 818 at the communication side 824, although the invention is not limited to a relay station that re-transmits data packets to a mobile station.

Embodiments of the present invention are applicable to relay stations and base stations operating under the IEEE 802.16 standard, including its extensions. However, embodiments of the present invention are not limited to this standard. Rather, relay stations and base stations operating under other standards, or no standards at all could be practiced without departing from the spirit of the present invention.

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A multi-hop mobile relay system, comprising a plurality of stations in a multi-hop sequence, wherein the stations in the multi-hop sequence reuse the same bandwidth, and the reusing stations are physically separate so that there is no interference between them.

2. A multi-hop mobile relay system, comprising a first station, a second station, a third station, and a fourth station, in which a first bandwidth is allocated to a data flow between the first station and the second station, a second bandwidth is allocated to the data flow between the second station and the third station, and the first bandwidth is reused by the data flow between the third station and the fourth station.

3. The multi-hop mobile relay system of claim 2, wherein the first station is a base station.

4. The multi-hop mobile relay system of claim 2, wherein the first station is a relay station.

5. The multi-hop mobile relay system of claim 2, 3 or 4, wherein the second and the third stations are relay stations.

6. The multi-hop relay system of claim 2, 3, 4 or 5, wherein the fourth station is a mobile station.

7. The multi-hop relay system of claim 2, 3, 4 or 5, wherein the fourth station is a relay station.

8. The multi-hop mobile relay system of any of claims 2 to 7, wherein the second and the third stations transmit and receive at different times.

9. The multi-hop mobile relay system of any of claims 2 to 8, wherein the first and the second bandwidths are uplink allocations.

10. The multi-hop mobile relay system of any of claims 2 to 8, wherein the first and the second bandwidths are downlink allocations.

11. The multi-hop mobile relay system of any of claims 2 to 8, wherein the first and the second bandwidths include an uplink region and a downlink region.

12. The multi-hop mobile relay system of any of claims 2 to 11, wherein the first and the second bandwidths are allocated by the first station.

13. The multi-hop mobile relay system of any of claims 2 to 12, wherein a data flow comprises one or more service flows.

14. The multi-hop mobile relay system of any of claims 2 to 13, wherein data flows are determined from each root branch present in the system.

15. The multi-hop mobile relay system of any of claims 2 to 14, wherein a bandwidth allocation function is associated with each data flow, the bandwidth allocation function assigning the first and the second bandwidths to the stations.

16. The multi-hop mobile relay system of any of claims 2 to 15, wherein a first data flow and a second data flow passing through a station are assigned separate bandwidths.

17. A method of bandwidth reuse in a multi-hop mobile relay system, comprising:

    providing a plurality of stations in a multi-hop sequence;
    selecting two physically separate stations in the multi-hop sequence that do not interfere; and
    reusing the same bandwidth at the physically separate stations.

18. A method of bandwidth reuse in a multi-hop mobile relay system, comprising
    providing a first station, a second station, a third station, and a fourth station;
    allocating a first bandwidth to a data flow between the first station and the second station;
    allocating a second bandwidth to the data flow between the second station and the third station; and
    reusing the first bandwidth by the data flow between the third station and the fourth station.

**19.** The method of bandwidth reuse in a multi-hop mobile relay system of claim 18, further comprising allocating the first and the second bandwidths by the first station.

**20.** The method of bandwidth reuse in a multi-hop mobile relay system of claim 18 or 19, further comprising:

associating a bandwidth allocation function with each data flow;
assigning the first and the second bandwidths to the stations according to the bandwidth allocation functions.

**21.** The method of bandwidth reuse in a multi-hop mobile relay system of claim 18, 19 or 20, further comprising assigning separate bandwidths to a first data flow and a second data flow passing through a station.

**22.** A system of bandwidth reuse in a multi-hop mobile relay system, comprising:

means for providing a plurality of stations in a multi-hop sequence;
means for selecting two physically separate stations in the multi-hop sequence that do not interfere; and
means for reusing the same bandwidth at the physically separate stations.

**23.** A system of bandwidth reuse in a multi-hop mobile relay system, comprising:

means for providing a first station, a second station, a third station, and a fourth station;
means for allocating a first bandwidth to a data flow between the first station and the second station;
means for allocating a second bandwidth to the data flow between the second station and the third station; and
means for reusing the first bandwidth by the data flow between the third station and the fourth station.

**24.** A system of bandwidth reuse in a multi-hop mobile relay system, comprising:

means for finding all root branches;
means for finding all data flows;
means for listing all the stations in an order preserving ordering stations in the root branches.
means for finding all overlapping stations with any given station;
means for creating new bandwidth allocations; and
means for reusing existing allocations based on the separation criterion of coverage areas of any two stations.

**25.** A multi-hop mobile relay system, comprising:

a base station, a first relay station, a second relay station, and a mobile station, wherein
a data flow is transmitted from the base station to the first relay station using a first bandwidth;
the data flow is transmitted from the first relay station to the second relay station using a second bandwidth;
the data flow is transmitted from the second relay station to a mobile station reusing the first bandwidth; where the coverage area of
the base station does not overlap with the coverage area of the second relay station.

EP 1 919 142 A2

114

RS UPLINK TX RANGE

BS          RS

108      112    110

106
MS1
(TALKS DIRECTLY TO BS)

102

116

RS DOWNLINK TX RANGE

118      MS2

120

MS3

104      (MS USING RS TO TALK TO BS)

100

FIG. 1

14

FIG. 2

FIG. 3A

FIG. 3B

FIG. 3C

EP 1 919 142 A2

FIG. 3D

FIG. 4A

FIG. 4B

EP 1 919 142 A2

PROVIDING A PLURALITY OF STATIONS IN A MULTI-HOP SEQUENCE ⌐502

SELECTING TWO PHYSICALLY SEPARATE STATIONS IN THE MULTI-HOP SEQUENCE THAT DO NOT INTERFERE ⌐504

REUSING THE SAME BANDWIDTH AT THE PHYSICALLY SEPARATE STATIONS ⌐506

FIG. 5

PROVIDING A FIRST STATION, A SECOND STATION, A THIRD STATION, AND A FOURTH STATION ⌐602

ALLOCATING A FIRST BANDWIDTH TO A DATA FLOW BETWEEN THE FIRST STATION AND THE SECOND STATION ⌐604

ALLOCATING A SECOND BANDWIDTH TO THE DATA FLOW BETWEEN THE SECOND STATION AND THE THIRD STATION ⌐606

REUSING THE FIRST BANDWIDTH BY THE DATA FLOW BETWEEN THE THIRD STATION AND THE FOURTH STATION ⌐608

FIG. 6

START OF
BANDWIDTH
DETERMINATION
FOR A CELL

FIND ALL ROOT BRANCHES — 702

FIND ALL DATA FLOWS ON THE FOUND ROOT BRANCHES — 704

ARRANGE ALL THE STATIONS (BASE STATION AND RELAY STATIONS) OF THE CELL INTO AN ORDERED LIST THAT PRESERVES THE ORDERING OF STATIONS IN THE ROOT BRANCHES. THIS MEANS THAT IF A STATION IS AT POSITION X IN A ROOT BRANCH, AND ANOTHER STATION IS AT POSITION Y, AND X<Y, THEN THE FIRST STATION MUST OCCUR EARLIER THAN THE OTHER STATION ON THE STATION LIST. FOR EACH STATION S INCLUDE A COUNT OF DATA FLOWS GOING THROUGH THE STATION, N(S) — 706

FOR EACH STATION, CREATE AN OVERLAPPING STATION LIST, I.E. A LIST OF ALL STATIONS WHOSE COVERAGE AREAS OVERLAP WITH THE GIVEN STATION. PUT ALSO THE BANDWIDTH ALLOCATION SET T(S) FOR EACH STATION S AS EMPTY — 708

SET THE CURRENT BANDWIDTH POOL AS EMPTY — 710

SELECT NEXT STATION FROM THE LIST (THE FIRST STATION IF THIS IS THE FIRST SELECTION), S — 712

READ THE COUNT OF DATA FLOWS OF THE STATION, N(S). TRY TO ALLOCATE N(S) BANDWIDTHS FROM THE BANDWIDTH POOL, BY TAKING AN ALLOCATION X FROM THE POOL AND CHECKING IF IT BELONGS TO T(R) FOR EACH STATION R OVERLAPPING WITH THE CURRENT STATION S. IF THE ALLOCATION IS IN T(R) TAKE ANOTHER ALLOCATION X FROM THE POOL; OTHERWISE PUT THE ALLOCATION INTO T(S). IF N(S) CANNOT BE FULLY SATISFIED IN THE ABOVE. CREATE NEW ALLOCATIONS FOR THE BALANCE OF N(S). PUT THESE ALLOCATIONS INTO THE POOL, AND INTO THE T(S) — 714

HAVE ALL STATION S BEEN ALREADY SELECTED ABOVE? — 716

NO

YES

END OF
BANDWIDTH
DETERMINATION
FOR A CELL

FIG. 7

**FIG. 8**

Labels in figure: 812, 810, 818, 812, 810, 818, 822, COMMUNICATION SIDE, COMMUNICATION SIDE, 824, SUBSCRIBER STATION, 816, PHYSICAL LAYER — 826, MEDIA ACCESS CONTROL LAYER — 828, RELAY STATION — 814, BASE STATION, SUBORDINATE RELAY STATION, 820, 802

EP 1 919 142 A2

24